# EUROPEAN PATENT SPECIFICATION

(11) **EP 1 252 105 B1**
(45) Date of publication and mention of the grant of the patent: **29.12.2004**
(21) Application number: 01900380.5
(22) Date of filing: 16.01.2001
(51) Int. Cl.: C02F 1/52, C02F 1/54

(54) **METHOD OF RECYCLING DISPERSION PAINT SUBSTANCES OR GLUES FROM WASTE WATER AND APPARATUS FOR PERFORMING THE SAME**
RECYCLING-VERFAHREN VON DISPERSIONSFARBSTOFFEN ODER KLEBSTOFFEN AUS ABWASSER UND VORRICHTUNG HIERFÜR
PROCEDE DE RECYCLAGE DE SUBSTANCES DE PEINTURES DISPERSIONS OU D'ADHESIFS, A PARTIR D'EAUX USEES, ET APPAREIL PERMETTANT DE METTRE EN OEUVRE CE PROCEDE

(30) Priority: 17.01.2000 CZ 20000155
(43) Date of publication of application: 30.10.2002
(73) Proprietor: ASIO, spol. s.r.o., 664 51 Jirikovice 83 (CZ)
(72) Inventor: POLINEK, Vlastimil;, 679 21 Cerná Hora (CZ)
(74) Representative: Matuskova, Martina
(86) International application number: PCT/CZ2001/000001
(87) International publication number: WO 2001/056935

(56) References cited:
- EP-A- 0 158 714
- EP-A- 0 514 132
- WO-A-93/07094
- DE-A- 2 335 327
- DE-A- 3 818 624
- US-A- 4 999 115

## Description

### Field of technology

The invention relates to a method of recycling dispersion paint substances selected from a group containing acrylic, acryloalkydic, acrylate styrene and acrylate polyurethane copolymers, wax coatings or glues selected from a group containing dispersion acrylates, dispersion polyvinylacetates, phenolaldehydes, starch, urea aldehydes, melamine aldehydes and mixtures of urea aldehyde and melamine aldehyde glues, from waste water and liquid waste, based upon chemical and physical treatment by alkalisation followed by coagulation by means of primary argillaceous coagulants and secondary organic acrylate coagulants and separation and de-watering of coagulation products by filtration and their returning to the production and treatment process.

### Prior art

Urea aldehyde glues with low emission of toxic formaldehyde are currently used in the production of plywood sheets, agglomerated plates, and furniture. The construction joinery uses also polyvinylacetate based dispersion glues and one part as well as two-part acrylic paints. The production of special plywood sheets, glued carrying structures and balks according to high strength requirements regarding the glued joint, water and weather resistance, makes melamine and phenolaldehyde based glues preferable. The usual manufacturing and treatment processes are intermittent, as a rule, and during the interruptions the equipment should be cleaned for preventing the glue to dry and harden within the manufacturing equipment. The above glues have usually 45 to 65 mass per cent of dry matter, the rest is water. The glues of urea, melamine, phenolic and dispersion type that are diluted under 20 mass per cent during the water cleaning process lose their homogeneity and get separated from water on the surface of the equipment as a sticky precipitate that is difficult to remove due to exceeded miscibility with water.

Melamine glues, e.g., require the utilization of a pressure-washing device or expensive washing solutions based upon anti-adhesive detergents, but the latter cause the degradation of glues in liquid waste, disabling their recycling. In the course of washing with water hydrolytic processes take place, phormaldehyde being eliminated from the methylol groups of glue chains and from the residual contents of formaldehyde adates with urea and melamine, resulting in multiple increase of formaldehyde in liquid waste/waste water, depending upon the contents of glue, pH, water temperature, the degree of dilution, and especially the effect of primary alkali containing free hydroxyle ions causing more than ten times higher elimination of formaldehyde into waste water. The loss of formaldehyde from the glue chain reduces its hydrophility, i.e. water solubility, resulting in its degradation for secondary use. A similar degradation by the effect of water takes place in phenolic glues.

The finishing of furniture, the constructional joinery, the printing of technical paper, the foundries and mechanical engineering production are areas where the traditional solvent based paints are increasingly replaced with environmentally more appropriate water based acrylics or modified acrylate alkydes, acrylate polyuretanes and acrylate styrenes that have become hydrophilous due to this modification and, accordingly, have achieved water solubility. Similar environmental friendliness has been achieved in water dispersions of natural waxes. Ruling out solvents is a major hygienic and environmental benefit, allowing to clean the treatment machinery with water.

Urea based, melamine and phenolic glues are polycondensates with formaldehyde and their biological resistance rules out biodegradation in water environment, such as in waste water treatment plants. Their liquid waste is classified in category Y-13 and the waste of paints in category Y-12, i.e. dangerous waste.

Thermal disposal in combustion plants of industrial waste is expensive. When burning urea and melamine glues, the triple mass content of nitrogen oxides, NOₓ, originates from the nitrogen contained in them. The development of toxic dioxin and of further dangerous mutants has been proven in this process.

Various types of chemical pretreatment are used for the disposal of the above mentioned liquid wastes of glues at the present day, separating the glues and paints from water by coagulants in order to be disposed for pay after dewatering as dangerous waste.

Methods allowing to recycle the glues from waste waters at the place of origin, returning them to the manufacturing process, are economically and environmentally more beneficial.

Pretreatment methods are known according to CS AO No 170877 for waste waters with urea aldehyde glue and according to CS AO No 172482 for phenolic glues. According to them the glues are separated from waste water by precipitation using solutions of primary coagulants based upon argillaceous and iron salts under simultaneous effect of organic acrylate flocculants accelerating the sedimentation of glue flocks. Their common drawback resides in that the condensed fractions of the glues are separated as sticky particles during the washing of the equipment, and during the precipitation of waste waters they sorb flocks of precipitated glues onto their surface, resulting into renewed turbidity of cleared water above the sediment. Removing this turbidity leads to increased consumption of coagulants, to lower pH of waste water and the sediment to pH 5 to 4.5, which is a region that is close to the condensation of glues and their recyclates.

Another method is known according to CS AO No 215605 relating to the adaptation of waste water from the manufacture of chipboard and agglomerated plates containing urea aldehyde or melamine aldehyde glues. Waste water is modified by alkalization using sodium hydroxide or ammonium hydroxide over pH 7 using polyelectrolytic stabilization effects on the basis of acrylic acid, i.e. flocculant and in some cases also primary argillaceous, ferric and lime coagulants are added.

This method does not solve cases of the manufacture of plywood boards and furniture where the treated waste water can not be recycled for glue mixtures that have no additions of water, except for water contained in the solution of the stiffener. A considerable ecological failure is the excessive secondary soiling of treated water by separated formaldehyde entering the product, namely the plywood plates, due to the recycled glue, thus worsening its hygienic harmfulness due to desorption.

A continuous universal equipment for separating flocculated organic impurities from waste waters is known according to the Czech patent No 279043, allowing their separation by way of flotation supported by pressure aerated cleared water, which is brought about either from the bottom over a plate sprinkler arranged at the bottom of the flocculator against the onflow of waste water introduced from above, using a primary coagulating agent and a tangential uplift along the internal side of the flotator. Water from the flocculator flows through the openings of a common bottom onto the coagulator and from the latter by openings under the lid into the flotator from which the aerated flotate of sludge can overflow over the top into a circumferential collar sludge interceptor, whereas the clarified water is discharged through a pipe from the bottom of the flotator vessel through a height adjustable outflow into a collecting vessel.

The disadvantage of such embodiment consists in that the articulate internal structure with rectangular transitions causes the flotate to sediment and to get tapped in the equipment, which is undesirable from the viewpoint of the required smooth recycling and retaining the utility characteristics of the flotate.

Although both glues and paints are rather expensive chemical products, the handling of the respective liquid waste results in their total devaluation, except for the mentioned option of coagulating glues by argillaceous salts and the treatment of waste water containing urea aldehydes for being recycled in the production of chipboards.. This causes considerable manufacturing and ecological losses, including undesirable cost of waste disposal. The surface treatment of construction wood products, e.g., results in losses of 15 to 40 mass per cent of paints due to overspraying.

According to EP-0514132, a method is known that allows purification of a circulating water in spray booths from the captured respray of dispersed acrylate or acrylate-polyurethane paints in a way that the booth bath is charged with alkali salts of sodium, potassium, calcium, so that the stickiness in the pH range 6 to 9 is reduced. Once the water is saturated with the respray of the paints, when the water bath is frothing, precipitation of sludge and paints in water is carried out by aluminium chloride or by polymeric aluminium chloride and polyacrylamide- based flocculants.

According to WO-A-9307094 a closed cyclic, gas-tight device is known that consists of a reactor, pumps, pressure filters, decanter, storage tanks, extractor and distillation column. The paint pastes, e.g. textile paint pastes, are decomposed in the reactor into ingredients as a result of a treatment with extraction organic solvents or sulfuric acid into 2 to 3 non-miscible phases that are in further parts separated from each other, are purified in the extractor to usable ingredients for mixing a paint paste, to a solid waste and repeatedly usable solvent.

Further, a method and a clarifying sedimentation tank are known according to the US Patent No. 499,115 for separation of solid substances from sludge waters, especially from separating plants of coal, rocks and sewage sludges. Above the upper cylindrical clarifying part of the reactor, there is arranged an annular sludge water feeder near to the centre of the sedimentation tank. The sludge water is supplied from the feeder by means of vertical feed tubes under the level near to the rotary mixer. An annular header of the flocculant is arranged above the feeder, with a system of vertical tubes issued in a proximity of sludge water feeding tubes. The flocculant solution is supplied by the vertical tubes. Due to the centrifugal mixing, the sludge water flows about the issue of the vertical tubes, thereby causing mixing of the sludge water with the flocculant. Herewith an aggregation of solid particles and a gravitational sedimentation of sludges occur.

A cylindrical continuous clarifying thickener is also known, which is suitable for separation of solid particles from aqueous wastewater treatment plant sludges or industrial sludges, according to the patent DE-A-381 8624. A supply pipe of a sludge suspension with an mixed-in flocculant is tangentially issued into the upper part of the centric vertical feed pipe. Under that, in the conically expanded part, there is arranged a built-in consisting of a conical mixing head with a mixing instrument fixed to an axially arranged mixing shaft passing throughout the whole height of the body of the cylindrical clarifier. On the transition of the cylindrical and conical part, there is arranged a bottom mixing apparatus which is rugged in shape, for finish-up of the aggregation of solid particles.

Although both glues and paints are rather expensive chemical products, the handling of the respective liquid waste results in their total devaluation, except for the mentioned option of coagulating glues by argillaceous salts and the treatment of waste water containing urea aldehydes for being recycled in the production of chipboards. This causes considerable manufacturing and ecological losses, including undesirable cost of waste disposal. The surface treatment of construction wood products, e.g., results in losses of 15 to 40 mass per cent of paints due to overspraying.

Further, a continuous apparatus according to EP-A-0 158 714 is known, containing an upper chamber and, under a circular bottom, a lower chamber. The upper chamber operates as a clarifier, the lower chamber as a sedimentation space. The shaft, provided by a raking apparatus in the upper chamber for raking of the deposited sludges into the lower chamber, passes through the centrical opening in the circular bottom. In the lower chamber there is a mixing instrument for grinding of deposited particles so that they can be pumped off by means of the sludge pump.

### Summary of the invention

The aim of the invention is to substantially eliminate the above drawbacks and deficiencies of the existing known recycling methods of the mentioned glues and paints and to create an apparatus for separating the mentioned products from waste waters and liquid waste so as to achieve full- fledged recycling within the original manufacturing and treatment process in which the waste water had originated.

This task is met and the above drawbacks and deficiencies of known solutions are done away with by the method of recycling dispersion paints selected from the group containing copolymers of acrylates, acrylate alkyds, acrylate styrene, and acrylate polyurethane copolymers, further wax based paints, or glues selected from the group containing acrylic dispersion paint substances, dispersion polyvinylacetate, phenolaldehyde, and starch base glues, urea aldehyde, and melamine aldehyde glues and mixtures of urea aldehyde and melamine aldehyde glues, from waste water and liquid waste, based upon chemical and physical treatment by alkalisation followed by coagulation by primary argillaceous coagulants and secondary organic acrylate coagulants and upon the separation and de-watering of coagulation products by filtration and their returning to the production and treatment process, characterised in that waste water and liquid waste containing acrylic dispersion paint substances or their copolymers of acrylate alkyde, acrylate styrene, or acrylate polyurethane type, or wax dispersion paints, or dispersion glues of the acrylate, the polyvinylacetate, or phenol aldehyde type of starch glues are alkalised to achieve pH 8 to 9.5 by way of a water solution containing 5 to 15 mass per cent of monovalent alcalic metal carbonate for retaining the utility features of the intermediary recycling product in the waste waters, while the waste water and liquid waste containing urea aldehyde or melamine aldehyde glues or their mixtures are alkalised to achieve pH 8 to 9.5 by way of a water solution containing 5 to 15 mass per cent of monovalent alcaline metal carbonate with the admixture of 1 to 40 mass per cent of urea, related to the water solution of a monovalent alcaline metal carbonate, whereupon the intermediary recycling product is separated by coagulation by way of a solution containing 5 to 10 mass percent of argillaceous salt under the concurrent effect of a water solution containing 0.1 to 0.2 mass percent of an anionactive acrylate flocculant under pH 7 to 5.8.

According to the invention an addition of 1 to 20 mass per cent of urea can be made to the mixture of urea aldehyde glue, and melamine aldehyde glue containing from 70 through 99 mass per cent of urea aldehyde glue, or 20 to 40 mass per cent of urea to the mixture of urea aldehyde and melamine aldehyde glue containing from 70 through 99 mass per cent of melamine aldehyde glue.

The substance of an apparatus for intermittent recycling comprising a reactor having a cylindrical case and a tapered bottom consists in that at the upper edge of the reactor, adjacent to the internal surface of its cylindrical case, a sieve filter is arranged with the mouth of the inlet pipe of waste water and, in direction to the internal surface of the cylindrical case, with a discharge chute and further a three-chamber graduated dispenser for treatment solutions, said chambers of which being provided with respective discharge pipes mouthing through the outer side over inlet fittings into the lower part of the internal area of the reactor over which the driving electric motor is arranged, the vertical shaft of which carries, close to the tapered bottom, a mixing and scraping bar, at least one adjustable mixing tool being accommodated between the bar and the driving electric motor, the lower part of the cylindrical case of the reactor having at least one discharge fitting with a discharge pipe mouthing above a separate second part of the apparatus arranged under the level of the reactor and consisting especially of a dewatering unit.

The substance of the apparatus for continuous recycling with flotation of the coagulant, comprising also a reactor with a cylindrical case and tapered bottom consists in that the reactor is provided, at mid height of the cylindrical case, with a tapered ring partition having outlet elements of pressure air arranged at its higher positioned internal edge, the upper end of reactor being provided with a vertical cylindrical inner structure the bottom part of which has a bell shaped surface adjacent, with a gap, to the internal surface of the cylindrical case, the upper end of the cylindrical inner structure being provided with a ring shaped cover under which, at the overflow level (Hv), a circular outlet trough of cleared water is arranged to which, outside the reactor, the outlet piping is attached that mouths above the separate second part of the apparatus arranged under the level of the reactor and consisting especially of a dewatering unit, whereas the bottom part of tapered bottom accepts the tangential entrance of the inlet pipe of the waste water mixture with the stabilising and coagulating agents and, above the same, also a tangential entrance of the flocculant piping, whereas at the level of the upper surface (Hf) the reactor is provided with a rotary scraping arm of the floatation product and with a collecting interceptor with outlet tube mouthing into the discharge piping.

It is favourable, if the separate second part of the apparatus arranged under the level of the reactor and comprising in particular the dewatering unit with discharge piping provided with a system of valves of which the first valve mouths into the collecting tank provided with a return pipe entering into the dewatering unit, the second valve being connected to the sewage system and the third valve mouthing into the re-pumping vessel having a pump for withdrawing the filtrate for utilisation, whereas adjacent to the dewatering device a container for the dewatered recycling product and a dissolving vessel of the recycling product with a mixer are accommodated.

The advantage of the recycling method according to the present invention consists in that it unifies the recycling technologies both of the respective glues and of the respective paints, which is enabled by their almost identical chemical basis created by hydrocarbon chain molecules in a similar way as in case of the hydrocarbon chain molecules of glues that are either urea aldehyde or melamine aldehyde or phenol aldehyde based, the chains of all these types comprising hydrophilic hydroxyle groups or amine groups or metylol groups ensuing both the solubility and dispersion capacity in water of these glues and paints. During glueing or surface treatment chemical reactions of chemical functional groups take place due to the evaporation of water, to the effect of temperature, of time and further technological factors, so as to combine chains of molecules and result in netting, while a glued joint or a paint film are brought about.

The unified method of recycling the above glues and the above paint substances has a considerable economical and ecological impact, in particular for woodworking, furniture, papermill and foundry industries applying glues and paints simultaneously.

An advantage of the apparatus according to the present invention resides in the possibility of its arrangement within the area of preparation and processing of glues and paints allowing it to combine in a unified, almost waste free technological manufacturing system with purposefully organised follow-up servicing. The concept of all embodiments of the apparatus including functional inner structures according to the type of operation and of controlling the technological process depending upon the level, time, and pH are designed so as to maintain the necessary chemical and physical properties of the partial stages of the intermediary recycling product within the reactor in all single stages, thus excluding any delays, ageing and loss of utility properties of the intermediary recycling product in the region of coagulation during the operation.

It has been proven that the addition of more than 10 mass per cent of the recycling product produced by way and in the equipment according to the present invention into the new paint does increase the coverage power of the original paint. The same has been proven during mixed recycling of acrylate dyes with starch glue added to new acrylic dye. It has been also proven that the addition of starch recyclate into the original starch above the level of 10 mass per cent extends the time of its resistance against moulds in the course of carton production.

### Examples of embodiment of the method according to the invention

### Example 1

Waste water containing any of the dispersion acrylic paints or their acrylate alkyds or acrylate styrene or acrylate polyurethane copolymers, or wax based dispersion paints, or dispersion acrylate, polyvinilacetate, or phenolaldehyde glues, or starch glues, will be alkalised by stabilising agent created by 6 % water solution of sodium carbonate to pH 8.5 under slow mixing and homogenisation. Then it is coagulated by 6 per cent water solution of aluminium phosphate under simultaneous effect of 0.1 per cent of a water solution of anionactive acrylate flocculant so as to achieve pH 6.8. When the mixing is over, the coagulate of the intermediary recycling product is left to sediment. If the waste water contains a dispersion type wax paint mass, the coagulate of the intermediary product will float onto the surface. The cleared water above the sediment or under the float product will be filtered and used, as need be, for the production process or can be mixed with sewage water and subject together with them to biological purification. The coagulate created by the sediment or the floating product of the intermediary product will be dewatered and returned according to its type for being utilised in the production.

### Example 2

Waste water containing any of the paints or glues according to the example 1 should be alkalised by a stabiliser created by 14 per cent water solution of sodium carbonate so as to achieve pH 9.5 under slow mixing and homogenisation. Then it is coagulated by 9 per cent water solution of aluminium sulphate under simultaneous effect of 0.2 per cent water solution of anionactive acrylate flocculant so as to reach pH 5.8. When the mixing is over, the coagulate of the intermediary recycling product is left to sediment. If the waste water contains any dispersion wax paint mass, the coagulate of the intermediary product will float on the level. The cleared water above the sediment or under the floating product will be filtered and used, as need be, for the production process or can be mixed with sewage water and subject together with it to biological purification. The coagulate created by the sediment or the floating product of the intermediary product will be dewatered and returned according to its type for being utilised in the production.

### Example 3

Waste water containing urea aldehyde glue, or a mixture of 98 per cent urea aldehyde glue and 2 per cent melamine aldehyde glue should be alkalised by a stabiliser created by 8 per cent water solution of sodium carbonate with the addition of 5 mass per cent of urea to pH 8.5 under slow mixing and homogenisation. Then it is coagulated by 6 per cent water solution of aluminium sulphate under simultaneous effect of 0.1 per cent water solution of anionactive acrylate flocculant so as to achieve pH 6.8. When the mixing is over the coagulate of the intermediary recycling product is left to sediment. The cleared water above the sediment will be filtered and used, as need be, for the production process or can be mixed with sewage water and subject together with it to biological purification. The coagulate created by the sediment of the intermediary product will be de-watered and returned according to its type for being utilised in the production.

### Example 4

Waste water containing melamine aldehyde glue, or a mixture of 98 per cent melamine aldehyde glue and 2 per cent urea aldehyde glue should be alkalised by a stabiliser created by 14 per cent water solution of sodium carbonate with the addition of 38 mass per cent of urea to pH 9.5 under slow mixing and homogenisation. Then it is coagulated by 9 per cent water solution of aluminium sulphate under simultaneous effect of 0.2 per cent water solution of anionactive acrylate flocculant so as to achieve pH 5.8. When the mixing is over the coagulate of the intermediary recycling product is left to sediment. The cleared water above the sediment will be filtered and used, as need be, for the production process, or can be mixed with sewage water and subject together with it to biological purification. The coagulate created by the sediment of the intermediary product will be de-watered and returned according to its type for being utilised in the production.

### Review of figures in the drawings

Examples of embodiments of an apparatus for performing the method according to the present invention have been depicted in drawings where Fig. 1 represents a diagrammatic vertical axial section of the first example of embodiment of an apparatus for intermittent recycling, Fig. 2 a diagrammatic vertical axial section through the second example of embodiment of an apparatus for continuous recycling with coagulant sedimentation and Fig. 3 a diagrammatic vertical axial section of the third example of embodiment of an apparatus for continuous recycling with coagulate flotation.

### Examples of embodiment of the apparatus according to the invention

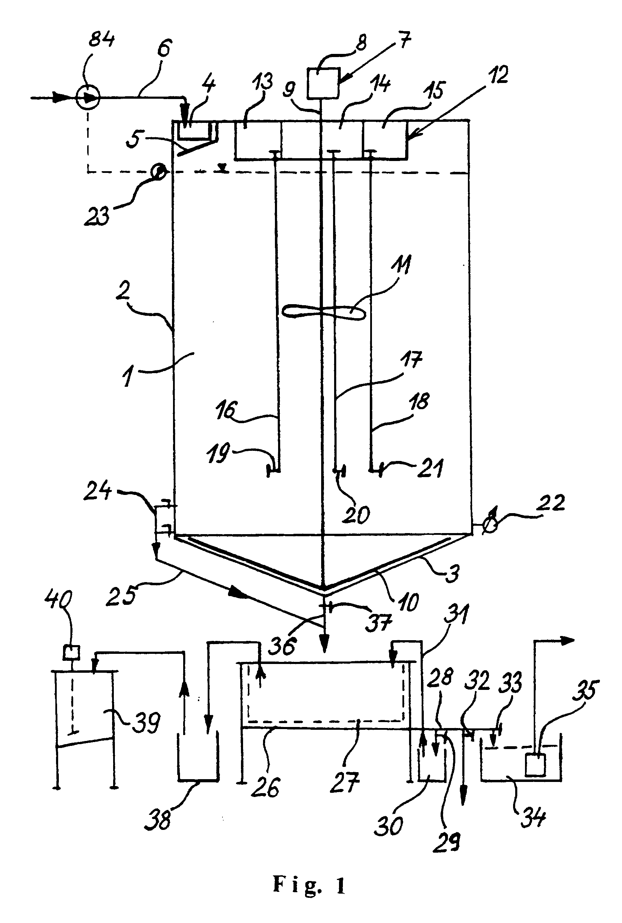

The apparatus for discontinuous recycling according to Fig. 1 is created by reactor 1 in shape of a vertically oriented vessel with cylindrical coat 2 and tapered bottom 3. The upper part of the reactor 1 contains, next to the internal surface of cylindrical coat 2, a sieve filter 4 provided with effluent chute 5 directed to this internal surface. The inlet pipe 6 of waste water mouths into the sieve filter 4. Reactor 1 is provided, in its vertical axis, by mixing device 7 comprising a driving electric motor 8, the vertical shaft 9 of which bears a mixing and scraping bar 10 close to the tapered bottom 3 of reactor 1, while between said bar 10 and the driving electric motor 8 at least one height adjustable mixing tool 11 is fixed, depending upon the level of liquid in reactor 1. The upper part of reactor 1 accommodates a three-chamber metering device for treatment liquids, the first chamber 13 being intended for the stabilizing agent, the second chamber 14 for the coagulant and the third chamber 15 for the flocculant. Each of the chambers 13, 14, 15 is provided with one of the discharge pipes 16, 17, 18 mouthing from the outer side of reactor 1 into the bottom part of its internal space through one of three inlet fittings 19, 20, 21. Close to the tapered bottom 3 of reactor 1 the cylindrical coat 2 contains the inbuilt pH meter 22 that is electrically connected to the inlet fittings 19, 20, 21 for controlled dosage of the operation liquids. Reactor 1 is further provided by level meter 23 with not illustrated signaling, said meter being electrically connected with the inlet pump 84. Above the tapered bottom 3 of reactor 1 the cylindrical coat 2 contains inbuilt outlet fittings 24 with discharge pipe 25 mouthing above the separate second part of the apparatus arranged under the level of the tapered bottom 3 of reactor 1. The tapered bottom 3 of reactor 1 is provided by outlet 36 with closing valve 37 that is connected with discharge pipe 25. The separate second part of the equipment is created in particular by the dewatering unit 26 containing, e.g., a filtration cloth 27. The dewatering unit 26 is provided with outlet pipe 28 having a system of valves of which the first valve 29 mouths into the collecting tank 30 provided with return pipe 31 mouthing into the dewatering unit 26, the second valve 32 is connected with not illustrated sewage and the third valve 33 mouths into the re-pumping tank 34 provided with pump 35 for pumping the filtrate for further utilization. Next to the dewatering unit 26 the tank 38 for the de-watered recycling product and the dissolving tank 39 with mixer 40 are accommodated.

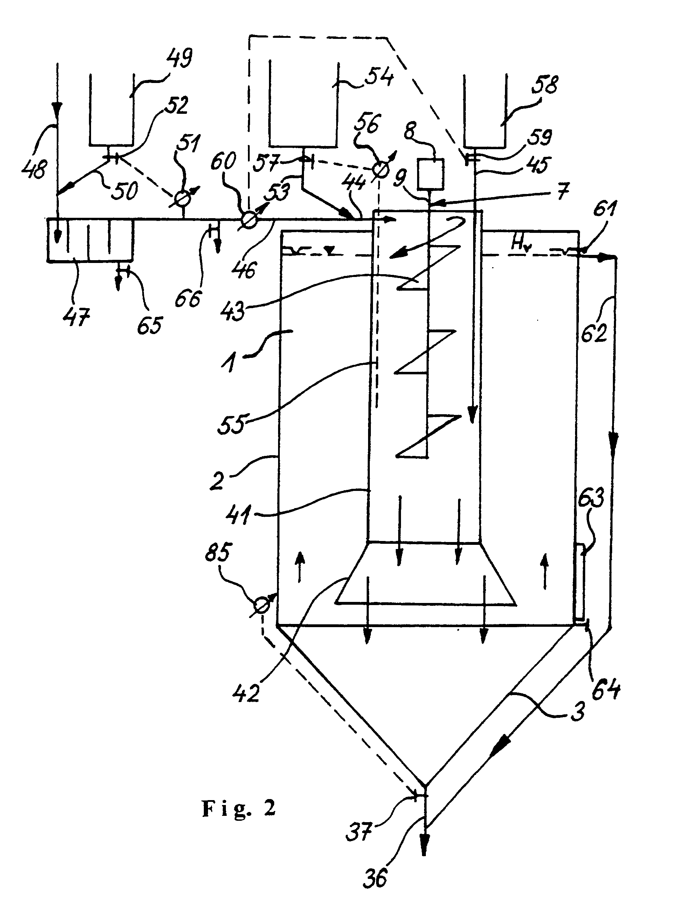

The apparatus for continuous recycling with sedimentation of the coagulate according to Fig. 2 consists also of reactor 1 in form of a vertically accommodated vessel with cylindrical coat 2 and tapered bottom 3. The internal space of reactor 1 houses the coaxially inbuilt cylindrical coagulator 41 provided with widened mouth 42 at its bottom end. The mixing device 7 containing the driving electric motor 8, on the vertical shaft 9 of which mixing paddles 43 are attached, is located within the axis of cylindrical coagulator 41. The inlet piping 44 for the mixture of waste water with the stabilizing and coagulating agent mouths tangentially into the cylindrical coagulator 41, as well as the intake piping 45 for the flocculant entering into the bottom part of cylindrical coagulator 41. The inlet piping 44 follows the delivery pipe 46 for the mixture of waste water with the stabilizing agent, the delivery pipe 46 leaving the mixer 47 accepting the mouth of the waste water pipe 46 that is connected with the stabilizing reservoir 49 with additional piping 50. The delivery pipe 48 comprises pH meter 51 that is electrically connected with the outlet valve 52 of the stabilizing vessel 49. The inlet pipe 44 accepts the additional pipe 53 connected to the coagulant reservoir 54. For the dosage of the coagulant into the inlet pipe 44 and thus into the cylindrical coagulator 41 this cylindrical coagulator 41 contains the immersed sensor 55 of another pH meter 56 that is electrically connected with the drainage valve 57 of the coagulating agent reservoir 54. The intake pipe 45 of the flocculating agent is connected to the outlet of the flocculant reservoir 58 the metering valve 59 of which is electrically connected with flow meter 60 inserted in the delivery pipe 46. Reactor 1 is further provided, at its internal upper edge, on the overflow level Hv with circumferential outlet 61 for allowing clear water to get into the discharging pipe 62 mouthing into the separate second part of the equipment, not illustrated in Fig. 2, arranged under the level of tepered bottom 3 of reactor 1 and consisting in particular of dewatering unit 26 in the same way as described in the apparatus for intermittent recycling according to Fig. 1. The tapered bottom 3 is also provided with outlet 36 with closing valve 37 for draining the sediment of the intermediary product of the coagulate into the dewatering unit 26, not illustrated in Fig. 2. The closing valve 37 is electrically connected with metering device 85 measuring the intensity of the opacity of the sedimenting intermediary product. The bottom part of cylindrical coat 2 of reactor 1 is provided with an inspection opening 63 for observing the height of the floating filtration floccular bed of the intermediary coagulate. The sampling fitting 64 is accommodated next to the inspection opening 63. The bottom mixer 47 and the delivery pipe 46 are provided with further sampling fittings 65, 66 for samples, and possibly also for the evacuation, especially of mixer 47.

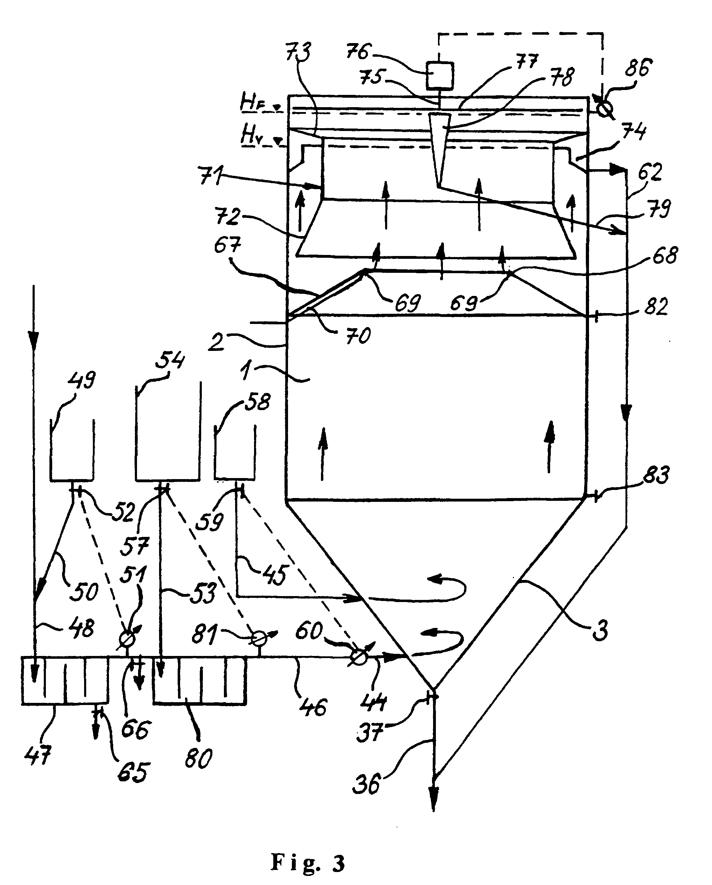

The apparatus for continuous recycling with floating of the coagulate according to Fig. 3 is created by reactor 1 in form of a vertically orientated vessel with cylindrical coat 2 and tapered bottom 3. Reactor 1 is provided with a tapered ring shaped partition 67 at its mid height that is anchored to the internal surface of cylindrical coat 2 by its circumferential part that is located lower. The internal rim 68 of the tapered ring shaped partition 67 is provided with outlet elements 69 of supply 70 of pressure air. A vertical cylindrical inner structure 71 is arranged under the upper rim of reactor 1 and provided with a bell shaped widening 72 at its lower end, adjacent to the internal surface of cylindrical coat 2, with a gap, and provided with a ring shaped cover 73 at its upper end for anchoring the whole cylindrical inner structure 71 to cylindrical coat 2 of reactor 1. In the space around the cylindrical inner structure 71 a circular discharge trough 74 for the outlet of cleared water is arranged at the required height of the overflow level Hv, the continuation of said trough being created by discharge pipe 62 mouthing under tapered bottom 3 into the outlet 36 provided with closing valve 37 for drainage of sludge from reactor 1. At the level of the upper surface Hf next to the upper edge of reactor 1 the output shaft 75 of driving electric motor 76 bears a pivotable scraping arm 77 for scraping the floating product from the upper surface Hf into the collecting tank 78. The operation of scraping arm 77 is controlled by measuring device 86 located at the cylindrical coat 2 of the reactor 1 between the top of the ring shaped cover 73 and the upper surface Hf of the floating intermediary product. The measuring device 86 is electrically connected with the driving electric motor 76. The floating product is removed from the collecting tank 78 by outlet tube 79 into the discharge pipe 62 mouthing above the separate second part of the apparatus, not illustrated in Fig. 3, arranged under the level of tapered bottom 3 of reactor 1 and created in particular by dewatering unit 26 in the same way as in the apparatus for intermittent recycling according to Fig. 1.

Reactor 1 at the lower part of tapered bottom 3 accepts tangentially the mouth of inlet pipe 44 of mixture of waste water with stabilizer and coagulant, following the delivery pipe 46 of the mixture of waste water with stabilizer while the delivery pipe 46 leaves the mixing vessel 80 that accepts the additional pipe 53 connected to coagulant reservoir 54. Also mixer 47 mouths into the mixing vessel 80 said mixer receiving the waste water supply pipe 48 that is connected with the stabilizing reservoir 49. The delivery pipe 46 is provided with another pH meter 81 that is electrically connected with drainage valve 57 of coagulant reservoir 54. In addition to that the supply pipe 46 is further provided with flow meter 60 that is electrically connected with metering valve 59 at the outlet of flocculant reservoir 58 the intake piping 45 of which is again tangentially mouthing into the tapered bottom 3 of reactor 1 above the tangential mouthing of inlet pipe 44 for the mixture of waste water with stabilizer and coagulant. Above the anchoring of tapered ring shaped partition 67 to the internal surface of cylindrical coat 2 of reactor 1, the latter is provided with the upper discharge fitting 82, and at the transition area between the cylindrical coat 2 and the tapered bottom 3 with the lower discharge fitting 83. The bottom of mixer 47 and the delivery piping 46 are provided with sampling fittings 65, 66 for samples, or possibly for emptying, especially the mixer 47 similarly to the apparatus according to Fig. 2.

An example of an embodiment for intermittent operation according to Fig. 1 operates as follows:

Waste water is supplied through the inlet pipe 6, depending upon the level of liquid in the reactor 1, into sieve filter 4 wherefrom it flows into the internal space of reactor 1 over discharge chute 5 to the internal wall of cylindrical coat 2. From the chambers 13, 14, 15 of three-chamber dispensing unit 12 the stabilizing, coagulating and flocculating agents are supplied through the respective pipes 15, 17, 18 through the outlet fittings 19, 20, 21 to the bottom part of reactor 1 where they get mixed with waste water by the mixing and scraping bar 10 and at least one height adjustable mixing tool 11 arranged above bar 10. In case of automatic control of the apparatus the stabilisation and coagulation is controlled by way of metering the stabilising and coagulating agent by pH meter 22 that is electrically connected with inlet fittings 19, 20. The effect of the above treatment liquids results in homogenisation, stabilisation, and following coagulation of the intermediary recycling product, under continuous creation of flocks that are not sticky and sediment after the mixing gets stopped with simultaneous clearing of water above the sediment, the cleared water being removed through discharge fitting 24 and discharge pipe 25 into dewatering unit 26 of the independent second part of the apparatus. The sediment is evacuated from reactor 1 separately through outlet 36 over closing valve 37 into dewatering unit 26. This apparatus for intermittent operation allows also the recycling of dispersion type wax paints in that after the coagulation and flocculation the intermediary product floats onto the level of filled reactor 1. Upon draining the cleared water under the flotate that will have dropped by this action into the tapered bottom 3, the floating product gets removed from the reactor 1 through outlet 36 over closing valve 37 into the dewatering unit 26. Herefrom the filtrate flows through outlet pipe 28 and, as case be, either through first valve 29 into collecting tank 30 for returning to dewatering unit 26, if the filtrate contains fine flocks, or through the second valve 32 into the sewage system, or by third valve 33 into the re-pumping tank 34 wherefrom it is pumped by pump 35 for further use. The dewatered recyclate can be, e.g., transferred manually from the dewatering unit 26 into container 38 wherefrom it gets to the dissolving tank 39 with mixer 40. After the recyclate will get solved, it will be supplied to the treatment process.

An example of embodiment for continuous recycling with coagulate sedimentation according to Fig. 2 operates as follows:

The mixture of waste water with stabilising and coagulating agents is brought tangentially by inlet pipe 44 into cylindrical coagulator 41 where their flow is oriented from the top to the bottom. The inlet pipe 44 is filled from the delivery pipe 46 supplying the mixture of waste water with stabilising agent leaving mixer 47 into which said mixture gets from waste water pipe 48 into which the stabilising agent from stabilising reservoir 49 is metered by additional pipe 50 over outlet valve 52 controlled by pH meter 51 that is arranged in the delivery pipe 46. The mentioned mixture in delivery pipe 46 is modified by coagulant metered from the coagulant reservoir 54 through additional pipe 53 over the drainage valve 57 controlled by pH meter 56 reading pH values directly in the cylindrical coagulator 41. The bottom part of cylindrical coagulator 41, depending upon the volume of through-flow of waste water with stabilising agent through the delivery pipe 46 with flow meter 60 gets an amount of flocculant metered from the flocculant reservoir 58, which results into the creation of a floccular filtration bed of the coagulate in the bottom part of reactor 1 the floating of which can be observed by the inspection hole in the cylindrical coat 2 of reactor 1. The cleared water rises through the ring shaped space around the cylindrical coagulator 41 to the top where it flows over into the circumferential outlet unit 61 wherefrom it is removed by discharge pipe 62 to the dewatering unit 26. The sediment from the floccular bed of the coagulant is drained from reactor 1 separately through outlet 36 over closing valve 37 into dewatering unit 26 where operations as described in example 1 take place.

An apparatus for continuous recycling with coagulate flotation according to Fig. 3 operates as follows:

The mixture of waste water with the stabilising and coagulation agents is brought tangentially by inlet pipe 44 into the internal space above the lower part of tapered bottom 3 of reactor 1 where the coagulation of the intermediary product rising into the zone with flocculant takes place. This mixture enters the inlet pipe 44 from the delivery pipe 46 that is filled from the mixing vessel 80 receiving liquid from mixer 47 that gets waste water through the waste water pipe 48 wherein the stabilising agent is metered through additional pipe 50 over outlet valve 52 controlled by pH meter 51 arranged between mixer 47 and mixing vessel 80 whereto a coagulating agent is metered from coagulant reservoir 54 through additional pipe 53 over outlet valve 57 controlled by pH meter 81 arranged in the delivery pipe 46. The flocculating agent is brought, also tangentially, into the zone above intake pipe 44, and namely through intake pipe 45 over metering valve 59 controlled by flow meter 60 arranged in delivery pipe 46. The flocculating agent brings about the finishing of coagulation and the creation of flock aggregates. The aggregated flotate flocks rise to the conical ring shaped partition 67 and further through its central opening upwards where the rising movement of the flotate is accelerated, being supported by the effect of pressure air leaving the outlet elements 69 along the internal rim 68 of tapered ring shaped partition 67. Above the same the flotate enters a bell shaped widening 72 of the cylindrical inner structure 71 wherefrom the flotate rises to the space above the level of ring shaped cover 73 and gets to the upper level Hf wherefrom it is scraped by scraping arm 77 into the collecting tank 78. Herefrom it is removed by outlet pipe 79 into the discharge pipeline 62. The cleared water from the flotate rises along the internal wall of cylindrical coat 2 into the gap between cylindrical coat 2 and the external circumference of the bell shaped widening 72 where it flows over into the discharge through 74 wherefrom it leaves through discharge pipe 62 into dewatering unit 26 where operations as described in example 1 take place.

### Industrial applicability

The recycling method and an apparatus for recycling the mentioned dispersion paints or mentioned glues can be utilised, especially in furniture manufacturing for glueing wooden elements of furniture and its finishing with dispersion paints.

### List of reference numbers

- 1: reactor
- 2: cylindrical coat
- 3: tapered bottom
- 4: sieve filter
- 5: discharge chute
- 6: inlet pipe
- 7: mixing device
- 8: driving electric motor
- 9: vertical shaft
- 10: mixing and scraping bar
- 11: mixing tool
- 12: three-chamber graduated dispenser
- 13: first chamber
- 14: second chamber
- 15: third chamber
- 16: discharge pipe
- 17: discharge pipe
- 18: discharge pipe
- 19: inlet fitting
- 20: inlet fitting
- 21: inlet fitting
- 22: pH meter
- 23: level meter
- 24: discharge fitting
- 25: discharge pipe
- 26: dewatering unit
- 27: filtration cloth
- 28: outlet pipe
- 29: first valve
- 30: collecting tank
- 31: return pipe
- 32: second valve
- 33: third valve
- 34: re-pumping tank
- 35: pump
- 36: outlet
- 37: closing valve
- 38: tank
- 39: dissolving tank
- 40: mixer
- 41: cylindrical coagulator
- 42: widened mouth
- 43: mixing paddle
- 44: inlet piping
- 45: intake piping
- 46: delivery pipe
- 47: mixer
- 48: waste water pipe
- 49: stabilizing reservoir
- 50: additional piping
- 51: pH meter
- 52: outlet valve
- 53: additional pipe
- 54: coagulant reservoir
- 55: sensor
- 56: pH meter
- 57: drainage valve
- 58: flocculant reservoir
- 59: metering valve
- 60: flow meter
- 61: circumferential outlet
- 62: discharge pipe
- 63: inspection opening
- 64: sampling fitting
- 65: sampling fitting
- 66: sampling fitting
- 67: ring shaped partition
- 68: internal rim
- 69: outlet element
- 70: supply
- 71: cylindrical inner structure
- 72: bell shaped widening
- 73: ring shaped cover
- 74: discharge trough
- 75: output shaft
- 76: driving electric motor
- 77: scraping arm
- 78: collecting tank
- 79: outlet tube
- 80: mixing vessel
- 81: pH meter
- 82: upper discharge fitting
- 83: lower discharge fitting
- 84: inlet pump
- 85: metering device
- 86: measuring device

## Claims

1. Method of recycling dispersion paint substances selected from a group containing acrylic, acryloalkydic, acrylate styrene and acrylate polyurethane copolymers, wax coatings or glues selected from a group containing dispersion acrylates, dispersion polyvinylacetates, phenolaldehydes, and starch, urea aldehydes, melamine aldehydes and mixtures of urea aldehyde and melamine aldehyde glues, from waste water and liquid waste, based upon chemical and physical treatment by alkalisation followed by coagulation by means of primary argillaceous coagulants and secondary organic acrylate coagulants and separation and de-watering of coagulation products by filtration and their returning to the production and treatment process, **characterized in that** waste water and waste containing acrylic dispersion paint substances or their copolymers of acrylate alkyde, acrylate styrene, or acrylate polyurethane type, or wax dispersion paints, or dispersion glues of the acrylate or the polyvinyl acetate, or the phenol aldehyde glues are alkalised to achieve pH 8 to 9.5 by way of a water solution containing 5 to 15 mass per cent of monovalent alcaline metal carbonate for retaining the utility features of the intermediary recycling product in the waste waters, while the waste water and liquid waste containing urea aldehyde or melamine aldehyde glues or their mixtures are alkalised to achieve pH 8 to 9.5 by way of a water solution containing 5 to 15 mass per cent of monovalent alcaline metal carbonate with the admixture of 1 to 40 mass per cent . of urea, related to the water solution of a monovalent alcaline metal carbonate, whereupon the intermediary recycling product is separated by coagulation by way of a solution containing 5 to 10 mass percent of argillaceous salt under the concurrent effect of a water solution containing 0.1 to 0.2 mass percent of an anionactive acrylate flocculant under pH 7 to 5.8.

2. Recycling method according to claim 1, **characterized in that** an addition of 1 to 20 mass per cent of urea is made to the mixture of urea aldehyde glue and melamine aldehyde glue containing from 70 through 99 mass per cent of urea aldehyde glue.

3. Recycling method according to claim 1, **characterized in that** an addition of 20 through 40 mass percent of urea is made to the mixture of urea aldehyde and melamine aldehyde glue containing from 70 through 99 mass per cent of urea aldehyde glue.

4. Apparatus for performing the method according to claim 1 comprising a reactor having a cylindrical coat and a tapered bottom and serving for intermittent recycling, **characterized in that** at the upper edge of reactor (1) adjacent to the internal surface of its cylindrical coat (2) a sieve filter (4) is arranged with the mouth of the inlet pipe (6) of waste water and, in direction to the internal surface of cylindrical coat (2), with a discharge chute (5), and further a three-chamber graduated dispenser (12) for treatment solutions, the chambers (13, 14, 15) of which being provided with respective discharge pipes (16, 17, 18) mouthing through the outer side over inlet fittings (19, 20, 21) into the lower part of the internal area of the reactor (1) over which the driving electric motor (8) is arranged, the vertical shaft (9) of which carries, close to the tapered bottom (3), a mixing and scraping bar (10), at least one adjustable mixing tool (11) being accommodated between the bar (10) and the driving electric motor (8), the lower part of the cylindrical coat (2) of the reactor having at least one discharge fitting (24) with discharge pipe (25) mouthing above a separate second part of the apparatus arranged under the level of the reactor 1 and consisting especially of a dewatering unit (26).

5. Apparatus for performing the method according to claim 1 containing a reactor with cylindrical coat and tapered bottom for continuous recycling and with floating the coagulant, **characterized in that** the reactor (1) is provided, at mid height of the cylindrical coat (2), with a tapered ring shaped partition (67) having outlet elements (69) of pressure air arranged at its higher positioned internal rim (68), the upper end of reactor (1) being provided with a vertical cylindrical inner structure (71) the bottom part of which has a bell shaped widening (72) adjacent, with a gap, to the internal surface of the cylindrical coat (2), the upper end of the cylindrical inner structure (71) being provided with a ring shaped cover (73) under which, at the overflow level (Hv), a circular discharge trough (74) of cleared water is arranged to which, outside the reactor (1), the discharge pipe (62) is attached that mouths above the separate second part of the apparatus arranged under the level of the reactor (1) and consisting especially of a dewatering unit (26), whereas the bottom part of tapered bottom (3) accepts the tangential entrance of the inlet pipe (44) of the waste water mixture with the stabilising and coagulating agents and, above the same, also a tangential entrance of the flocculant intake piping (45), whereas at the level of the upper surface (Hf) the reactor (1) is provided with a pivotable scraping arm (77) of the flotation product and with a collecting tank (78) with outlet tube (79) mouthing into the discharge piping (62).

6. Apparatus according to claims 4 and 5 **characterized in that** the separate second part of the apparatus arranged under the level of reactor (1) and comprising in particular the dewatering unit (26) with outlet pipe (28) provided with a system of valves of which the first valve (29) mouths into the collecting tank (30) provided with a return pipe (31) entering into the dewatering unit (26), the second valve (32) being connected to the sewage system and the third valve (33) mouthing into the re-pumping tank (34) having a pump (35) for withdrawing the filtrate for utilisation, whereas adjacent to the dewatering unit (26) a tank (38) for the dewatered recyclation product and a dissolving tank (39) of the recyclation product with mixer (40) is accommodated.

## Patentansprüche

1. Verfahren zur Rückgewinnung von Dispersionsfarben aus der Gruppe von Akrylat-, Akrylatalkyd-, Akrylatstyren- und Akrylatpolyurethan-Kopolymeren, Wachsfarben, bzw. von Klebstoffen aus der Gruppe, zu der Dispersionsakrylat-, Dispersionspolyvinylazetat-, Phenolaldehyd-, Stärke-, Harnstoffaldehyd-, und Melaminaldehydklebstoffe sowie Mischungen von Harnstoffaldehyd- und Melaminaldehydklebstoffen gehören, aus Abwasser und aus flüssigen Abprodukten, ausgehend von einer chemischphysikalischen Behandlung mittels Alkalisierung mit nachfolgender Koagulation mit primären Tonerdekoagulanten und sekundären organischen Akrylatkoagulanten, der Trennung und Entwässerung von Koagulaten mittels Filtration und deren Rückkehr in den Fertigungs-/ Behandlungsprozess, **dadurch gekennzeichnet, daß** Abwasser und flüssige Abprodukte mit Inhalt von Dispersionsfarben des Akrylattyps, oder deren Akrylatalkyd-, Akrylatstyren- und Akrylatpolyurethan-Kopolymere, Dispersionswachsfarben, bzw. von Dispcrsionswachsklebstoffen, oder Dispersionsakrylat-, oder Polyvinylazetat-, Phenolaldehyd-, oder Stärkeklebstoffen, auf pH 8 - 9,5 mit einer wässrigen Lösung, die 5 - 15 % Masse eines Karbonats eines einwertigen alkalischen Metalls zum Erhalten der Nutzeigenschaften des Zwischenproduktes der Rückgewinnung im Abwasser alkaliniert werden, wobei das Abwasser und flüssige Abprodukte mit Inhalt von Hamstofaldehyd- oder Melaminaldehydklebstoffen oder deren Gemischen mit einer wässrigen Lösung mit 5 - 15 % Masse eines Karbonats eines einwertigen alkalischen Metalls auf pH 8 - 9,5 alkaliniert werden, mit Zugabe von 1 - 40 % Masse von Harnstoff, bezogen auf die wässrige Lösung des Karbonats des einwertigen alkalischen Metalls, wonach das Zwischenprodukt der Rückgewinnung durch Koagulation mittels einer Lösung, die 5 - 10 % Masse eines Tonerdesalzes enthält, abgetrennt wird, bei gleichzeitiger Einwirkung einer wässrigen Lösung, die 0,1 - 0,2 % Masse eines anioaktiven Akrylatflokulants bei pH 7 - 5,8 enthält.

2. Verfahren zur Rückgewinnung nach Anspruch 1, **dadurch gekennzeichnet, daß** 1 - 20 % Masse des Harnstoffes zum Gemisch des Harnstoffaldehyd- und Melaminaldehydklebstoffes mit Inhalt von 70 - 99 % Masse des Harnstoffaldehydklebstoffes beigemischt werden.

3. Verfahren zur Rückgewinnung nach Anspruch 1, **dadurch gekennzeichnet, daß** 20 - 40 % Masse des Harnstoffes zum Gemisch des Harnstoffaldehyd- und Melaminaldehydklebstoffes mit Inhalt von 70 - 99 % Masse des Malaminaldehydklebstoffes beigemischt werden.

4. Verfahren zur Rückgewinnung nach Anspruch 1, **dadurch gekennzeichnet, daß** am oberen Rand des Reaktors (1) an der inneren Fläche seines Zylindermantels (2) ein Siebfilter (4) angeordnet ist, in den das Anlaufrohr (6) von Abwasser einmündet, und der in Richtung zur inneren Fläche des Zylindermantels (2) mit einem Ablassrutsch (5) versehen ist, und weiters ein Dreikammerdosierer (12) für Betriebslösungen, dessen Kammern (13, 14, 15) jeweils mit Ablassrohren (16, 17, 18) versehen sind, die von der äußeren Seite über Anlassarmaturen (19, 20, 21) in den unteren Teil des Innenraums des Reaktors (1) münden, wobei oberhalb des Reaktors (1) der elektrische Antriebsmotor (8) angeordnet ist, auf dessen vertikaler Welle (9) am kegelförmigen Boden (3) die Misch- und Abstreifleiste (10) befestigt ist und zwischen der letzteren und dem elektrischen Antriebsmotor (8) mindestens ein einstellbares Mischwerkzeug (11) und im unteren Teil des zylindrischen Mantels (2) des Reaktors (1) mindestens eine Ablassannatur (24) eingebaut sind, deren Ablassrohrleitung (25) über dem selbständigen zweiten Teil der Anlage mündet, der unter der Ebene des Reaktors (1) angeordnet und insbesondere durch eine Entwässerungseinrichtung (26) gebildet ist.

5. Anlage zum Durchführen des Verfahrens nach Anspruch 1, die einen Reaktor mit einem zylindrischen Mantel und einem kegelförmigen Boden enthält, zur kontinuierlichen Rückgewinnung mit Flotation des Koagulats, **dadurch gekennzeichnet, daß** im mittleren Teil der Höhe des zylindrischen Mantels (2) der Reaktor (1) mit einer kegelförmigen Zwischenrüigtrennwand (67) mit Mündungselementen (69) von Druckluft, die an ihrem oberen Innenrand (68) angeordnet sind, versehen ist, wobei an seinem oberen Rand der Reaktor (1) einen vertikalen zylindrischen Einbau (71) hat, der am unteren Ende mit einer glockenartigen Fläche (72) versehen ist, die mit Abstand an die Innenfläche des zylindrischen Mantels (2) anknüpft, wobei das obere Ende des zylindrischen Einbaus (71) mit einem Zwischen-ringdeckel (73) versehen ist, unter dem in der Höhe der Überlauffläche (Hv) ein ringförmiger Ablaßtrog (74) des geklärten Wassers angeordnet ist, zu dem außerhalb des Reaktors (1) die Ablaßrohrleitung (62) angeschlossen ist, die oberhalb des selbständigen zweiten Teils der Anlage mündet, der unter der Ebene des Reaktors (1) angeordnet und insbesondere durch die Entwässerungsvorrichtung (26) gebildet ist, wobei im kegelförmigen Boden (3) an seinem unteren Teil die Anlaufrohrleitung (44) des Gemisches von Abwasser mit Stabilisator und Koagulant tangential einmündet und ober demselben das Austrittrohr (45) des Flokulants tangential mündet, wobei auf der Ebene der oberen Oberfläche (Hf) der Reaktor (1) mit einem drehbaren Abstreifarm (77) des Flotationsproduktes sowie mit einem Sammelgefäß (78) und mit Austrittrohr (79), das in das Ablaßrohr (62) mündet, versehen ist.

6. Anlage nach Ansprüchen 4 und 5, **dadurch gekennzeichnet, daß** der selbständige zweite Teil der Anlage, der unter der Ebene des Reaktors (1) angeordnet und insbesondere von der Entwässerungsvorrichtung (26) mit Ablaßleitung (28) gebildet ist, wobei die Letztere ein System von Ventilen besitzt, von denen das erste (29) in den Sammeltank (30) einmündet, der mit Rückstrang (31) versehen ist, der in die Entwäs-serungsvorrichtung (26) einmündet, das zweite Ventil (32) mit der Kana-lisation und das dritte Ventil (33) mit dem Umpumptank (34) verbunden ist, der mit einer Pumpe (35) zum Abpumpen des Filtrats zu dessen Nutzung, versehen ist, wobei neben der Entwässerungsvorrichtung (26) ein Bunker (38) für das entwässerte rückgewonnene Produkt sowie ein Lösunksbunker (39) des rückgewonnenen Produktes mit Mischer (40) angeordnet werden.

## Revendications

1. Procédé de recyglage de substances de peintures dispersions choisis du groupe contenant les copolymères d'acrylate, d'acrylatalkyde, d'acrylatstyrène d'acrylatpolyuréhane, les substances de peintures de cire ou les colles choisis du groupe contenant des colles dispersions d'acrylate, d'polyvinylacétat, de phénolaldéhyde, d'amidon, d'urée-aldéhyde, de mélaminaldéhyde et les mélanges des colles d'urée-aldéhyde et mélaminaldéhyde, surtout d' eaux usées et d' effluents liquides, le procédé basé sur un traitement chimico-physique sous l'action d'alcalisation, d'une coagulation successive à l'aide des coagulants d'aluminium primaires et des coagulants organiques d'acrylate secondaires pour la séparation et déshydratation des coagulants par filtration et leur retour dans le processus de production et de traitement, **caractérisé en ce que** les eaux usées et les effluents liquides avec une teneur en substances de peintures dispersions d'acrylate ou de leurs copolymères d'acrylatalkyde ou d'acrylatstyrène, ou d'acrylatpolyuréthane, ou des substances de peintures dispersions du cire, ou des colles dispersions d'acrylate, d'polyvinylacétat, de phénolaldéhyde ou des colles d'amidon, sont alcalisés pour obtenir pH entre 8 et 9,5 au moyen de la solution aqueuse contenant 5 à 15 % du poids du carbonate du métal alcalin monovalent pour maintenir les valeurs utiles du sous-produit du recyclage dans les eaux usées, les eaux usées et les effluents liquides avec la teneur en colles à base d'urée-aldéhyde ou mélaminaldéhyde ou de leurs mélanges étant alcalisés pour obtenir pH entre 8 et 9,5 au moyen de la solution aqueuse contenant 5 à 15 % du poids du carbonate du métal alcalin monovalent avec ajout de 1 à 40% du poids de l'urée, rapporté à la solution aqueuse du carbonate du métal alcalin monovalent, après quoi le sous-produit de recyclage se sépare par la coagulation au moyen de la solution aqueuse contenant entre 5 et 10 % du poids du sel d'aluminium sous l'effet simultané de la solution aqueuse contenant 0,1 à 0,2 % du poids du floculant d'acrylate aux ions actifs à pH de 7 à 5,8.

2. Procédé de recyglage selon la revendication 1 caractisé en ce que l'on ajoute de 1 à 20 % du poids de l'urée au mélange de colle d'urée-aldéhyde et de mélaminaldéhyde comportant entre 70 et 99 % du poids de la colle d'urée-aldéhyde.

3. Procédé de recyglage selon la revendication 1 **caractérisé en ce que** l'on ajoute de 20 à 40% du poids de l'urée au mélange de la colle d'urée-aldéhyde et de mélaminaldéhyde comportant entre 70 et 99% du poids de la colle de mélaminaldéhyde.

4. Le dispositif destiné à la réalisation du procédé de recyglage selon la revendication 1 comportant un réacteur à l'enveloppe cylindrique au fond conique, pour un recyclage discontinu, **caractérisé en ce que** près de l' extrémité supérieur du réacteur (1) à la surface intérieure de son enveloppe cylindrique (2), un filtre au tamis (4) est situé, dans lequel la conduite d'amenée (6) des eaux usées est abouti, et qui est pourvu d'un glissoir d'écoulement (5) vers la surface interne de l'enveloppe cylindrique (2) et encore, un jaugeur à trois chambres (12) pour les solutions de service dont les chambres (13, 14, 15) sont pourvues idividuellement des conduites d'évacuation (16, 17, 18) aboutissant du côté externe par les robinetteries d'entrée (19, 20, 21) dans la partie inférieure de la surface interne du réacteur (1), tandis qu'au-dessus du réacteur (1), un moteur de commande électrique (8) est posé sur l'axe vertical (9) duquel, près du fond conique (3), une barre d'agitation et de raclage (10) est fixé et, entre elle et l'électromoteur de commande (8) au moins un instrument d'agitation réglable (11) est arrangé et, dans la partie inférieure de l'enveloppe cylindrique (2) du réacteur (1), au moins une robinetterie d'écoulement (24) est encastrée avec la conduite d'écoulement (25) débouchant au-dessus de la deuxième partie autonome du dispositif qui est située au-dessous du niveau du réacteur (1) et constituée notamment d'un dispositif de drainage (26).

5. Le dispositif destiné à la réalisation du procédé de recyglage selon la revendication 1 comportant le réacteur à l'enveloppe cylindrique au fond conique pour un recyclage continu avec flotation du coagulant **caractérisé en ce que** le réacteur (1), dans la partie centrale de l' hauteur de son enveloppe cylindrique (2), il est muni d'une cloison conique intermédiaire (67) aux éléments d'sorti (69) de l'air comprimé, qui sont arrangés près de son bord interne plus haut (68), et le réacteur (1), près de son bord supérieur, il est muni d'un encastrement vertical cylindrique (71) pourvu sur son extrémité inférieure d'une surface en forme de cloche (72) adjacent, avec un espacement, à la surface interne de l'enveloppe cylindrique (2) tandis que l'extrémité supérieure du encastrement vertical cylindrique (71) est pourvue d'un couvercle circulaire (73) sous lequel, à la hauteur du niveau de déversement (Hv), une goulotte d'évacuation circulaire (74) de l'eau clarifiée est située auquelle, de l'extérieur du réacteur (1), la conduite (62) d'évacuation est branchée, qui débouche au-dessus de la deuxième partie autonome du dispositif arrangée sous le niveau du réacteur (1), et constituée notamment du dispositif d'drainage (26), et dans le fond conique (3) prés de sa partie inférieur, une conduite d'alimentation (44) du mélange des eaux usées avec le stabilisateur et le coagulant est débouchée tangentielment et au-dessus elle une conduite d'évacuation (45) du floculant est disposée aussi tangentielment, tandis qu'au niveau supérieur (Hf) le réacteur (1) est pourvu d'un bras pivotant de raclage (77) du produit de flottage et du collecteur (78) au tuyau de sorti (79) débouchant dans une conduite d'évacuation (62).

6. Le dispositif selon les revendication 4 et 5 **caractérisé en ce que** la deuxième partie autonome du dispositif située au-dessous du niveau du réacteur (1) et constituée notamment du dispositif de drainage (26) avec une conduite d'écoulement (28), qui est muni d'un lot de soupapes dont la première soupape (29) est débouchée dans un bac collecteur (30), qui est muni d'une conduite de retour (31) abouchante dans le dispositif de drainage (26), le deuxième soupape (32) est reliée au système de canalisation et la troisième soupape (33) débouche dans un bac de pompage (34) muni de la pompe (35) pour pomper le filtrat pour sa valorisation, et à côté du dispositif de drainage (26) il se trouve une réservoir (38) du produit de recyclage déshydraté, et le bac de dissolution (39) du produit de recyclage muni de l'agitateur (40).
